# EUROPÄISCHE PATENTSCHRIFT

(11) **EP 2 491 886 B1**
(45) Veröffentlichungstag und Bekanntmachung des Hinweises auf die Patenterteilung: **07.05.2014**
(21) Anmeldenummer: 11155907.6
(22) Anmeldetag: 24.02.2011
(51) Int. Cl.: A61C 8/00

(54) **Dentales Kieferimplantat zum Tragen eines Implantataufbaus**
Dental implant for holding an implant structure
Implant dentaire pour soutenir une suprastructure d'implant

(43) Veröffentlichungstag der Anmeldung: 29.08.2012
(73) Patentinhaber: Abboud, Marcus, 53721 Siegburg (DE)
(72) Erfinder: Abboud, Marcus, 53721 Siegburg (DE)
(74) Vertreter: Patentanwälte ter Smitten Eberlein Rütten Partnerschaftsgesellschaft

(56) Entgegenhaltungen:
- WO-A1-2004/105632
- WO-A1-2008/141404
- DE-A1- 19 903 482
- DE-A1-102006 045 188
- DE-U1-202006 012 016
- US-A- 4 988 297
- US-A- 5 577 912

## Beschreibung

Die Erfindung bezieht sich auf ein dentales Kieferimplantat zum Tragen eines Implantataufbaus.

Ein dentales Kieferimplantat ist der Teil einer dentalen Implantat-Anordnung, der unmittelbar in den Patientenkiefer implantiert wird, um einen Implantataufbau zu tragen. Der Implantataufbau besteht in der Regel aus einem Zahnersatz-Halsteil und einem separaten Zahnersatz-Kopfteil, der sogenannten Zahnkrone.

Im Allgemeinen wird für die gesamte Implantat-Anordnung ein geradliniger Aufbau angestrebt, d.h. das Kieferimplantat und der Implantataufbau liegen annähernd in derselben Längsachse. Allerdings lässt der Kieferknochen des Patienten, die darin verlaufenden Nervenbahnen und andere Randbedingungen es nicht immer zu, das Kieferimplantat stets ungefähr quer zur Bissebene in den Kieferknochen zu implantieren. Wenn das Kieferimplantat geneigt zu der Bissebene implantiert wird, muss der Implantataufbau entsprechend geneigt an dem Kieferimplantat fixiert werden.

Eine dentale Implantat-Anordnung mit einem zum Kieferimplantat geneigten Implantataufbau ist beispielsweise aus EP 0 449 334 A1 bekannt. Problematisch ist bei geneigten Implantataufbauten die nichtaxiale Krafteinleitung in das Kieferimplantat, die wegen der hieraus resultierenden hohen Drehmomente zu hohen radialen Kräften führen, die nahezu punktförmig auf den Kieferknochen übertragen werden. In diesen Bereichen besteht hierdurch eine hohe Wahrscheinlichkeit für Knochenabbau, wodurch sich der Sitz des Kieferimplantats im Patienten kiefer noch weiter verschlechtert.

Aus WO 2004/105632 ist ein geneigtes Kieferimplantat bekannt, das im Kniebereich Nuten aufweist, die jeweils ungefähr in der lokalen Querebene angeordnet sind.

Aufgabe der Erfindung ist es, ein Kleferimplantat für eine geneigte bzw. geknickte Implantat-Anordnung mit verbesserter Abstützung im Patientenkiefer zu schaffen.

Diese Aufgabe wird erfindungsgemäß gelöst mit einem Kleferimplantat mit den Merkmalen des Anspruchs 1.

Das Kieferimplantat besteht aus einem Implantatkörper, der an seinem kieferabgewandten Längsende eine Aufbau-Befestigungsstruktur zur Befestigung des Implantataufbaus aufweist. Der Implantataufbau kann einteilig oder zweiteilig ausgeführt sein. Bevorzugt besteht der Implantataufbau aus einem Zahnersatz-Halsteil, das an dem Implantatkörper befestigt ist und auf dem das Zahnersatz-Kopfteil fixiert ist, beispielsweise zementiert ist.

An dem kieferabgewandten Längsende des Implantatkörpers weist dieser eine Aufbauebene auf, auf der der Implantataufbau abgestürzt ist. Die Aufbauebene steht in einem Winkel β von 75° bis 45° zur Längsachse des Implantatkörpers. Wenn der Implantataufbau mit seiner Längsachse exakt senkrecht auf der Aufbauebene sitzt, steht die Längsachse des Implantataufbaus also in einem Winkel von 15° bis 45° zur Längsachse des Implantatkörpers. Da die Aufbauebene geneigt zu dem Implantatkörper angeordnet ist, erfolgt bei richtiger Wahl des Aufbauwinkels und der Orientierung der Aufbauebene im Raum die Krafteinleitung von dem Implantataufbau in den Implantatkörper ungefähr senkrecht zu der Aufbauebene.

Der. Implantatkörper weist einen Knochenabschnitt auf, der bei implantiertem Implantat vollständig in dem Kieferknochen eingetaucht ist, und weist einen Nicht-Knochenabschnitt auf, der aus dem Kieferknochen herausragt und in das Zahnfleisch hineinragt. An dem kieferabgewandten Längsende des Implantatkörper-Knochenabschnitts ist eine von der Mantelfläche des Implantatkörpers radial nach außen abragenden Stützstruktur vorgesehen, die von mindestens einem in einer Stegebene liegenden Stützsteg gebildet wird. Der Stützsteg liegt also in einer einzigen Ebene und beschreibt keine Schraubenlinie, Die Stegebene ist ungefähr in dem Aufbauwinkel β zu einer Implantatkörper-Querebene geneigt, so dass die Stegebene parallel zu der Aufbauebene des Implantatkörpers angeordnet ist.

Die Stegebene des Stützsteges steht also ungefähr senkrecht zur Längsachse des Implantataufbaus, so dass die durch den Implantataufbau in seiner Längsachse eingeleiteten Kräfte über die hierzu ungefähr senkrecht stehenden Stützstege ungefähr senkrecht zu ihrer Stegebene in den Kieferknochen eingeleitet werden können. Hierdurch können die von dem Implantatkörper in den Kieferknochen eingeleiteten Flächenkräfte erheblich reduziert werden, wodurch wiederum die Gefahr von Knochenabbau erheblich verringert wird.

Der Stützsteg erstreckt sich nicht über den gesamten Implantatkörper-Umfang, sondern ist nur an dem Teil des Implantatkörper-Umfangs angeordnet, an dem Kräfte von dem Implantatkörper in den Kieferknochen eingeleitet werden. Der Stützsteg ist daher in Umfangsrichtung an der Stumpfwinkelseite des Implantatkörpers durch eine Unterbrechung unterbrochen. Die Stumpfwinkelseite des Implantatkörpers ist die Seite, an der der eingeschlossenen Winkel zwischen der Mantelfläche und der Aufbauebene des Implantatkörpers am größten ist, der äußere Winkel an dieser Stelle also stumpf ist. Die Spitzwinkelseite des Implantatkörpers liegt der Stumpfwinkelseite genau gegenüber, also dort, wo der zwischen der Mantelfläche und der Aufbauebene eingeschlossene Winkel am kleinsten ist, also der äußere Winkel an dieser Stelle spitz ist. Durch die Unterbrechung des Stützsteges auf der Stumpfwinkelseite des Implantatkörpers wird der Gesamtumfang des Implantatkörpers in diesem Bereich so klein wie möglich gehalten. Dies ist deshalb von Bedeutung, weil der zulässige Gesamtdurchmesser des Implantatkörpers sehr begrenzt ist und nur wenige Millimeter beträgt.

Vorzugsweise ist die Unterseite des Stützsteges eben ausgebildet und liegt ungefähr parallel zu der Stegebene bzw. der Aufbauebene. Hierdurch wird eine größtmögliche Kraftübertragungs-Fläche generiert, über die die eingeleiteten Kräfte im Wesentlichen senkrecht zur Grenzfläche des Stützsteges in den Kieferknochen übertragen werden.

Gemäß einer bevorzugten Ausgestaltung wird die Stützstruktur von mehreren zueinander parallelen Stützstegen gebildet. Über die Anzahl der Stützstege kann die Kraftübertragungs-Fläche, die ungefähr senkrecht zur Krafteinleitung steht, entsprechend vergrößert werden.

Vorzugsweise sind die Unterbrechungen der Stützstege in Umfangsrichtung von Stützsteg zu Stützsteg jeweils verschieden lang. Jeder Stützsteg kann auf diese Weise auf den Sektor begrenzt werden, in dem tatsächlich eine Krafteinleitung stattfindet. Hierdurch wird der Implantatkörper in den Bereichen gestärkt, in den die Unterbrechung vorgesehen ist.

Gemäß einer bevorzugten Ausgestaltung sind die Unterbrechungen der Stützstege zum kieferzugewandten Längsende jeweils länger als am kieferabgewandten Längsende des Knochenabschnittes des Implantatkörpers. Je weiter weg der Stützsteg von der Aufbauebene angeordnet ist, desto größer ist der Unterbrechungs-Sektor und desto kleiner ist der Stützsteg-Sektor. Besonders bevorzugt sind die Stützstege mittensymmetrisch übereinander angeordnet, das heißt die Stützsteg-Mittellinien aller Stützstege liegen in einer einzigen Radialebene.

Vorzugsweise erstrecken sich alle Stützsteg-Unterbrechungen mindestens kieferseitig einer Querebene des Implantatkörpers. Besonders bevorzugt schneidet sich diese Querebene in einem einzigen Punkt mit der Ebene, die den Knochenabschnitt des Implantatkörpers begrenzt.

Die meisten Kieferimplantate weisen in ihrem Knochenabschnitt eine Gewindestruktur zum Einschrauben des Implantatkörpers in den Kieferknochen auf. Der Implantatkörper wird also beim Implantieren in den Kieferknochen eingeschraubt. Hierbei muss vermieden werden, dass die Stützstruktur mit den Stützstegen mit dem Kieferknochen kollidiert, da die Stützstege nicht schraubenförmig, sondern ringförmig ausgebildet sind und den Teil einer Ellipse beschreiben. Die Stützstege können also nicht in den Kieferknochen eingeschraubt werden. Der Kieferknochen muss daher in dem Bereich, in den die Stützstege in den Kieferknochen eintauchen, entsprechend weit aufgebohrt werden, Dieser aufgebohrte Bereich kann vollständig durch die Stützstege ausgefüllt werden, wenn diese kieferseitig einer Querebene unterbrochen sind. Bis zu dieser Querebene kann die von den Stützstegen gebildete Stützstruktur in den aufgebohrten Bereich axial hineingeschoben bzw. eingeschraubt werden.

Gemäß einer bevorzugten Ausgestaltung umfasst die Aufbau- Befestigungsstruktur einen Innenkonus, dessen Konusachse annähernd senkrecht zur Stegebene steht. Hierdurch wird es grundsätzlich möglich, lineare Implantataufbauten für lineare implantat-Anordnungen zu verwenden.

Vorzugsweise umfasst die Aufbau-Befestigungsstruktur einen biegsamen Ankerzug, der in dem Implantatkörper in der lmplantatkörper- Längsrichtung verläuft und in dem lmplantatkörper verankert ist. Je größer die Neigung der Aufbau-Längsachse zur lmplantatkörper-Längsachse ist, desto geringer ist die für die Befestigung des Implantataufbaus in dem Implantatkörper zur Verfügung stehende Tiefe in der lmplantataufbau-Längsachse. Mit einem biegsamen Ankerzug kann im Prinzip die gesamte Längserstreckung des lmplantatkörpers für die Fixierung genutzt werden. Der Ankerzug verläuft in dem lmplantatkörper in der Längsrichtung des Implantatkörpers und verläuft in dem Implantataufbau in der Längsrichtung des Implantataufbaus. Im Bereich der Befestigungsstruktur wird der Ankerzug um den Aufbauwinkel entsprechend umgelenkt.

Vorzugsweise ist das Kieferimplantat als Schraubenimplantat ausgebildet, und weist in dem Knochenabschnitt eine Gewindestruktur zum Einschrauben des Implantatkörpers in den Kieferknochen auf.

Im Folgenden wird ein Ausführungsbeispiel der Erfindung anhand der Zeichnungen näher erläutert.

Es zeigen:
Figur 1 eine Kieferimplantat-Anordnung mit einem Kieferimplantat in Seitenansicht, und
Figur 2 die Kieferimplantat-Anordnung der Figur 1 im Längsschnitt.

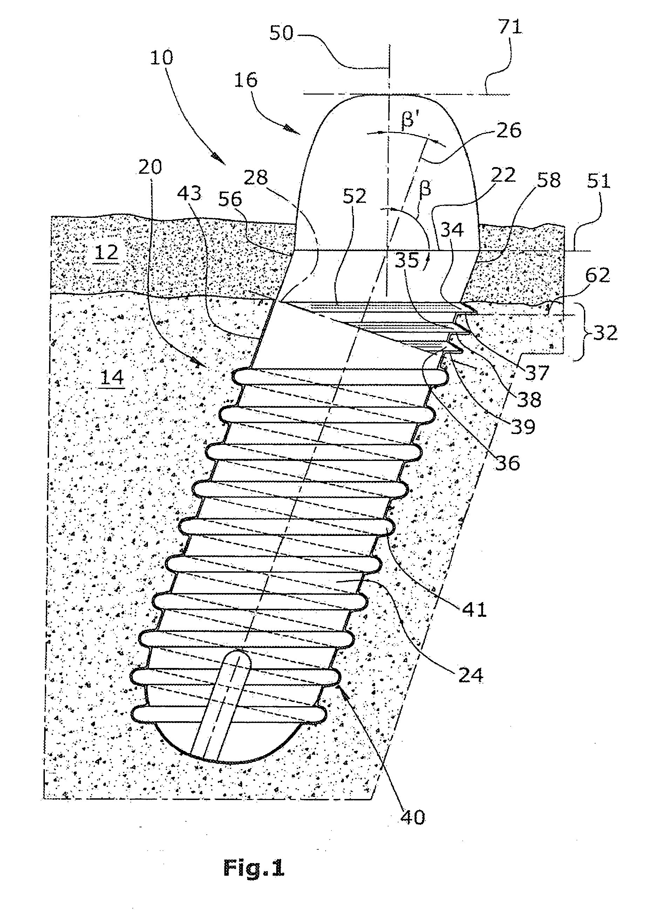

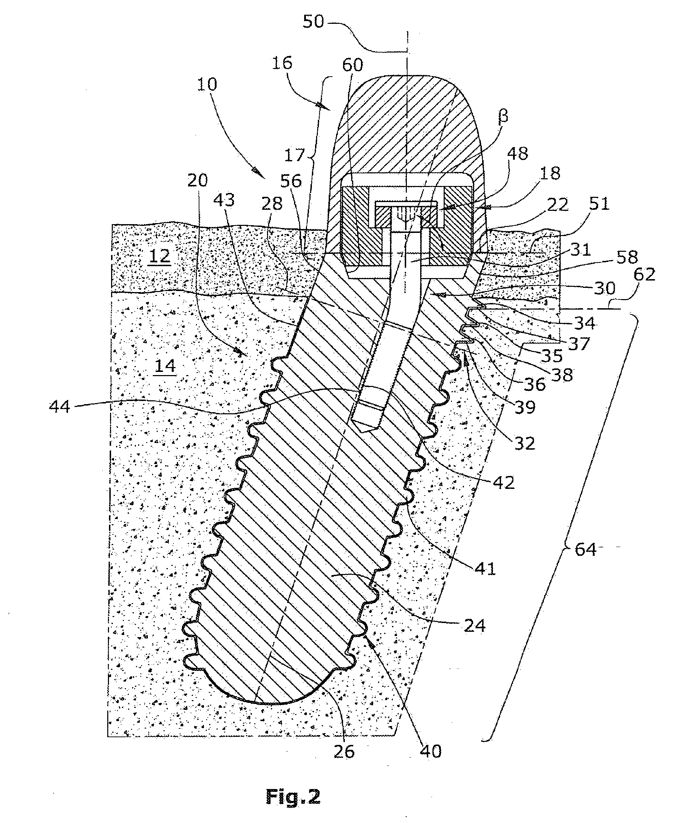

In den Figuren 1 und 2 ist schematisch eine angewinkelte Kieferimplantat-Anordnung 10 dargestellt, die in einen Patientenkiefer implantiert ist. Der Patientenkiefer ist vorliegend ein Unterkiefer und besteht aus dem Kieferknochen 14 und dem Zahnfleisch 12. Die Kieferimplantat-Anordnung besteht im Wesentlichen aus drei Einzelteilen, nämlich dem Titan-Kieferimplantat 20, dem daran befestigten Zahnersatz-Halsteil 18 aus Titan und dem wiederum daran befestigten Zahnersatz-Kopfteil 16 aus Keramik. Das Zahnersatz-Halsteil 18 und das Zahnersatz-Kopfteil 16 zusammen bilden einen Implantataufbau 17.

Das Kieferimplantat 20 wird von einem einstückigen Implantatkörper 24 gebildet, der bezüglich seiner Umgebung in einen Knochenabschnitt 64 und einen daran angrenzenden Zahnfleischabschnitt gegliedert ist. Der Zahnfleischabschnitt schließt mit einer Aufbauebene 51 ab, auf die der Implantataufbau 17 aufgesetzt ist. Der Implantatkörper 24 weist eine Längsachse 26 auf, die in einem Winkel β' von 15° bis 45° zu der Längsachse 50 des Implantataufbaus 17 angeordnet ist. Hieraus ergibt sich, dass die Aufbauebene 51 in einem Winkel β von 75° bis 45° zu der Implantatkörper-Längsachse 26 steht.

Der Knochenabschnitt 64 des Implantatkörpers 24 ist funktional in zwei Abschnitte gegliedert, wobei der kieferzugewandte Abschnitt eine Gewindestruktur 40 mit einem Gewindesteg 41 zum Einschrauben des Implantatkörpers 24 in den Kieferknochen 14 und einen Abschnitt mit einer in der Seitenansicht keilförmigen Stützstruktur 32 mit mehreren Stützstegen 34,35,36 zur Abstützung des kieferabgewandten Endes des Implantatkörpers 24 in dem Kieferknochen 14.

Die Stützstege 34, 35,36 liegen jeweils in einer Stegebene 62, wobei alle Stegebenen der Stützstege 34, 35,36 zueinander parallel und parallel zu der Aufbauebene 51 sind. Alle Stützstege 34, 35,36 sind an ihren kieferzugewandten Unterseiten 37,38,39 jeweils eben ausgebildet, wobei die ebenen Unterseiten 37,38,39 ungefähr parallel zu der Aufbauebene 51 des lmplantatkörpers 24 sind. Die Aufbauebene 51 ist ungefähr parallel zu einer virtuellen Bissebene 71, die zwischen dem Unterkiefer und dem Oberkiefer des Patienten aufgespannt ist.

Die vorliegend drei Stützstege 34, 35,36 sind auf einer Stumpfwinkelseite 56 des Implantatkörpers 24 durch eine Unterbrechung in Umfangsrichtung unterbrechen. Die Stumpfwinkelseite 56 des Implantatkörpers 24 ist der Punkt bzw. die Seite des Implantatkörpers 24, an der der vom Implantatkörper gebildete Winkel zwischen seiner Mantelfläche 43 und der Aufbauebene 51 am größten und über 90° ist. Die Spitzwinkelseite 58 liegt der Stumpfwinkelseite 56 genau gegenüber. Die Stützsteg-Unterbrechung ist jeweils auf der kieferzugewandten Seite einer Querebene 28 des Implantatkörpers 24 vorgesehen. Diese Querebene 28 steht senkrecht zu der Implantatkörper-Längsachse 26 und schneidet sich genau in einem Punkt mit der Grenzfläche zwischen dem Kieferknochen 14 und dem Zahnfleisch 12 bzw. mit der den Knochenabschnitt 64 und den Zahnfleischabschnitt des Implantatkörpers 24 trennenden Ebene. Die Unterbrechung des jeweiligen Stützsteges kann sich bei einem kieferzugewandten Stützsteg 34 über einen Sektor von beispielsweise 30° des im Querschnitt kreisförmigen Implantatkörpers 24 erstrecken, und kann sich auf weit über 180° bei einem kieferabgewandten Stützsteg 36 erstrecken.

An seinem kieferabgewandten Ende weist der Implantatkörper 24 im Bereich der Aufbauebene 51 als Aufbau-Befestigungsstruktur unter anderem einen Innenkonus 60 auf, in den ein korrespondierender Außenkonus des Zahnersatz-Halsteils 18 eingesetzt ist. Das Zahnersatz-Halsteil 18 ist axial mit Hilfe eines biegsamen Ankerzuges 30 mit dem Implantatkörper 24 verspannt. Der Ankerzug 30 weist einen biegsamen Ankerzug-Körper 31 auf, der mit seinem endseitigen Außengewinde 44 in ein entsprechendes Innengewinde 42 in dem Implantatkörper 24 verschraubt ist. Das andere Ende des Ankerzug-Körpers 31 ist mit einer Spannmutter 48 mit dem Zahnersatz-Halsteil 18 axial verspannt.

Auf den Stützstegen 34, 35,36 sind in Längsrichtung der Stützstege Mikrorillen 52 vorgesehen, durch die das Anwachsen und die Haftung des Kieferknochens 14 an dem Implantat verbessert wird. Die Oberfläche der Stützstege 34,35,36 und der übrigen Flächen des Implantatkörpers 24 kann alternativ oder zusätzlich durch andere Maßnahmen strukturiert oder aufgeraut sein, um die Haftung zwischen dem Kieferknochen und dem Implantatkörper zu verbessern.

## Patentansprüche

1. Kieferimplantat (20) mit einem Implantatkörper (24), wobei der Implantatkörper (24) aufweist:
eine Aufbau- Befestigungsstruktur in dem Implantatkörper (24) zur Befestigung eines Implantataufbaus (17) an dem kieferabgewandten Implantatkörper- Längsende,
eine kieferabgewandte Aufbauebene (51) an dem kieferabgewandten Implantatkörper- Längsende, die in einem Aufbauwinkel β von 75° bis 45° zur Implantatkörper-Längsachse (26) geneigt ist, und
eine von der Implantatkörper- Mantelfläche an dem kieferabgewandten Längsende eines Implantatkörper- Knochenabschnittes (64) nach außen abragende Stützstruktur (32), die von mindestens einem in einer Stegebene (62) liegenden Stützsteg (34,35,36) gebildet wird,
wobei die Stegebene (62) parallel zu der Aufbauebene angeordnet ist, und wobei der Stützsteg (34, 35,36) sich nicht über den Implantatkörper- Gesamtumfang erstreckt, sondern an der Stumpfwinkelseite (56) des Implantatkörpers (24) durch eine Unterbrechung in Umfangsrichtung unterbrochen ist.

2. Kieferimplantat (20) nach Anspruch 1, wobei die Unterseite (37,38,39) der Stützstege (34,35,36) eben ausgebildet ist und parallel zu der Stegebene (62) liegt.

3. Kieferimplantat (20) nach einem der vorangegangenen Ansprüche, wobei die Stützstruktur (32) von mehreren zueinander parallelen Stützstegen (34, 35,36) gebildet wird.

4. Kieferimplantat (20) nach Anspruch 3, wobei die Unterbrechungen der Stützstege (34, 35,36) jeweils verschieden lang sind.

5. Kieferimplantat (20) nach Anspruch 4, wobei Unterbrechungen der Stützstege (34, 35,36) zum kieferzugewandten Längsende jeweils länger als am kieferabgewandten Längsende des Knochenabschnittes (64) sind.

6. Kieferimplantat (20) nach einem der Ansprüche 3-5, wobei sich die Unterbrechungen kieferseitig einer Querebene (28) erstrecken.

7. Kieferimplantat (20) nach einem der vorangegangenen Ansprüche, wobei die Aufbau-Befestigungsstruktur einen Innenkonus (60) umfasst, dessen Konusachse (50) annähernd senkrecht zur Stegebene (62) steht.

8. Kieferimplantat (20) nach einem der vorangegangenen Ansprüche, wobei die Aufbau- Befestigungsstruktur einen biegbaren Ankerzug (30) umfasst, der in dem Implantatkörper (24) in Längsrichtung verläuft und verankert ist.

9. Kieferimplantat (20) nach einem der vorangegangenen Ansprüche, wobei das kieferseitige Ende des Knochenabschnittes (64) des Implantatkörpers (24) eine Gewindestruktur (40) zum Einschrauben des Implantatkörpers (24) in einen Kieferkochen (14) aufweist.

## Claims

1. A jaw-mounted dental implant (20) with an implant body (24), the implant body (24) comprising:
an abutment fastening structure arranged in the implant body (24) to fasten an implant abutment (17) on an implant body longitudinal end facing away from a jaw;
an abutment plane (51) facing away from the jaw, said plane being arranged at the implant body longitudinal end facing away from the jaw, the abutment plane being inclined at an abutment angle β of 75° to 45° relative to an implant body longitudinal axis (26); and
a support structure (32) projecting outward from an implant body outer surface on a longitudinal end of an implant body bone portion (64) facing away from the jaw, the support structure being formed by at least one support web (34, 35, 36) arranged in a web plane (62), the web plane (62) being arranged substantially parallel to the abutment plane, and wherein said one support web (34, 35, 36) does not extend around an entire circumference of the implant body, but is interrupted at an obtuse-angle side (56) of the implant body (24) by a discontinuity arranged in a circumferential direction.

2. The jaw-mounted dental implant (20) as recited in claim 1, wherein the support webs (34, 35, 36) each have a bottom side (37, 38, 39) which is planar and which is arranged parallel to the web plane (62).

3. The jaw-mounted dental implant (20) as recited in one of the preceding claims, wherein the support structure (32) is formed by a plurality of mutually parallel support webs (34, 35, 36).

4. The jaw-mounted dental implant (20) as recited in claim 3, wherein the discontinuities in the support webs (34, 35, 36) differ in length.

5. The jaw-mounted dental implant (20) as recited in claim 4, wherein the discontinuities of the support webs (34, 35, 36) are longer, respectively, at a longitudinal end facing the jaw than at the longitudinal end of the bone portion (64) facing away from the jaw.

6. The jaw-mounted dental implant (20) as recited in one of claims 3-5, wherein the discontinuities extend on a jaw side of a transverse plane (28).

7. The jaw-mounted dental implant (20) as recited in one of the preceding claims, wherein the abutment fastening structure includes an inner cone (60) with a cone axis (50) oriented substantially vertically to the web plane (62).

8. The jaw-mounted dental implant (20) as recited in one of the preceding claims, wherein the abutment fastening structure includes a flexible anchoring strand (30) which extends in the implant body (24) in a longitudinal direction and is anchored in the implant body.

9. The jaw-mounted dental implant (20) as recited in one of the preceding claims, wherein a jaw-side end of the bone portion (64) of the implant body (24) includes a thread structure (40) configured to screw the implant body (24) into a jaw bone (14).

## Revendications

1. Implant dentaire (20) avec un corps d'implant (24), ledit corps d'implant (24) comprenant:
une structure de fixation d'un pilier implantaire dans le corps d'implant (24) pour fixer un pilier implantaire (17) à l'extrémité longitudinale du corps d'implant opposée à la mâchoire,
un plan de pilier implantaire (51) opposé à la mâchoire, situé à l'extrémité longitudinale du corps d'implant opposée à la mâchoire, ledit plan étant incliné sous un angle de pilier β de 75° à 45° par rapport à l'axe longitudinal du corps d'implant (26), et
une structure de support (32) en saillie vers l'extérieur à partir de la surface d'enveloppe du corps d'implant à l'extrémité longitudinale, opposée à la mâchoire, d'une section d'os (64) recevant le corps d'implant, ladite structure étant formée par au moins une nervure d'appui (34, 35, 36) située dans un plan de nervure (62), ledit plan de nervure (62) étant disposé parallèle au plan de pilier, et ladite nervure de support (34, 35, 36) ne s'étendant pas sur tout le pourtour du corps d'implant, mais étant interrompu sur le coté d'angle obtus (56) du corps d'implant (24) par une discontinuité dans la direction circonférentielle.

2. Implant dentaire (20) selon la revendication 1, dans lequel la face inférieure (37, 38, 39) des nervures de support (34, 35, 36) est plane et parallèle au plan de nervure (62).

3. Implant dentaire (20) selon l'une quelconque des revendications précédentes, dans lequel ladite structure de support (32) est formée par plusieurs nervures de support (34, 35, 36) parallèles entre eux.

4. Implant dentaire (20) selon la revendication 3, dans lequel les discontinuités des nervures de support (34, 35, 36) ont, respectivement, des longueurs différentes.

5. Implant dentaire (20) selon la revendication 4, dans lequel les discontinuités des nervures de support (34, 35, 36) sont, respectivement, plus longues vers l'extrémité longitudinale dirigée vers la mâchoire, qu'à l'extrémité longitudinale de la section d'os (64), opposée à la mâchoire.

6. Implant dentaire (20) selon l'une quelconque des revendications 3 - 5, dans lequel les discontinuités s'étendent sur le coté mandibulaire d'un plan transversal (28).

7. Implant dentaire (20) selon l'une quelconque des revendications précédentes, dans lequel la structure de fixation d'un pilier implantaire a un cône intérieur (60) dont l'axe de cône (50) est approximativement perpendiculaire au plan de nervure (62).

8. Implant dentaire (20) selon l'une quelconque des revendications précédentes, dans lequel la structure de fixation d'un pilier implantaire comprend un goujon d'ancrage (30) s'étendant dans la direction longitudinale dans ledit corps d'implant, dans lequel il est ancré.

9. Implant dentaire (20) selon l'une quelconque des revendications précédentes, dans lequel l'extrémité de la section d'os (64) du corps d'implant (24), dirigée vers la mâchoire, comprend une structure de filetage (40) pour visser ledit corps d'implant (24) dans un os de mâchoire (14).
